# EUROPÄISCHE PATENTSCHRIFT

(11) **EP 3 965 247 B1**
(45) Veröffentlichungstag und Bekanntmachung des Hinweises auf die Patenterteilung: **25.02.2026**
(21) Anmeldenummer: 21190484.2
(22) Anmeldetag: 10.08.2021
(51) Int. Cl.: H02J 3/00, H02B 1/52, H02G 11/00

(54) **MOBILES NETZVERTEILSYSTEM**
MOBILE NETWORK DISTRIBUTION SYSTEM
SYSTÈME MOBILE DE DISTRIBUTION RÉSEAU

(30) Priorität: 07.09.2020 DE 102020123259
(43) Veröffentlichungstag der Anmeldung: 09.03.2022
(73) Patentinhaber: Westnetz GmbH, 44139 Dortmund (DE)
(72) Erfinder: Claßen, Dirk, 45329 Essen (DE); Knippers, Michael, 45481 Mülheim (DE); Rogmann, Christoph, 46519 Alpen (DE)
(74) Vertreter: Cohausz & Florack

(56) Entgegenhaltungen:
- CN-U- 203 553 683
- US-A1- 2011 188 167
- NORDWEST HANDEL AG ROBERT-SCHUMAN-STR. 17 D-44263 DORTMUND: "Der Baukatalog", 30 April 2017 (2017-04-30), XP055586057, Retrieved from the Internet <URL:https://www.kicherer.de/fileadmin/user_upload/bilder/pdf/Kicherer_Der_Baukatalog_2017.pdf> [retrieved on 20190507]

## Beschreibung

Der Gegenstand betrifft ein mobiles Netzverteilsystem, insbesondere für ein elektrisches Niederspannungsnetz.

In elektrischen Niederspannungsnetzen treten unregelmäßig und unvorhersehbar Fehler auf, die dazu führen, dass die an die Niederspannungsnetze angeschlossenen Teilnehmer (Lasten und/oder Einspeiser) vom elektrischen Niederspannungsnetz getrennt sind und insbesondere keine Energie beziehen oder einspeisen können. Im Falle eines Fehlers entlang eines Strangs eines Niederspannungsnetzes wird dieser Fehler am Netzverknüpfungspunkt detektiert und der Strang wird vom restlichen Netz getrennt. Die Teilnehmer an dem Strang werden spannungslos gesetzt und eine Reparatur des Strangs wird in Gang gesetzt.

In der Regel ist eine Reparatur eines Niederspannungsstrangs jedoch mit Tiefbauarbeiten verbunden, da insbesondere in Deutschland ein Großteil der zumindest städtischen Niederspannungsnetze im Tiefbau verlegt ist. Im Grunde ist dies unproblematisch, kann jedoch vereinzelt zu Ressourcenengpässen führen.

Insbesondere müssen die Wartungstrupps für solche Wartungsarbeiten in Bereitschaft gehalten werden. Für den Fall das mehrere Fehler gleichzeitig auftreten, reichen die Ressourcen nicht aus. Auch Fehler zu Nachtzeiten oder an Wochenenden oder Feiertagen sind problematisch, da das Vorhalten einer Wartungsbereitschaft extrem teuer ist. Andererseits ist es notwendig, dass Störungsende so schnell wie möglich nach Eintritt der Störung herbeizuführen. Dies hat zweierlei Gründe. Einerseits ist es den Teilnehmern nicht zuzumuten, zu lange ohne elektrische Energieversorgung auszukommen. Andererseits besteht jedoch häufig auch durch regulatorische Vorgaben der Zwang zu einer schnellen Störungsbeseitigung. Dabei kann die Dauer einer Störung bis zur Behebung der Störung relevant für eine Pönale sein. Daher ist es für den Netzbetreiber von großer Bedeutung, möglichst schnell ein Störungsende herbeizuführen. Aus den oben genannten Gründen ist dies bisher nicht immer möglich. Die Dokumente US 2011/188167 A1 und CN 203 553 683 U offenbaren hierzu ein mobiles Netzverteilsystem.

Dem Gegenstand lag daher die Aufgabe zugrunde, ein System zur Verfügung zu stellen, mit dem flexibel und schnell eine Erstversorgung von Teilnehmern an elektrischen Energienetzen nach Eintritt einer Störung bereitgestellt werden kann.

Diese Aufgabe wird durch ein mobiles Netzverteilsystem nach Anspruch 1 gelöst. Weitergehende Ausführungsformen werden in den abhängigen Ansprüchen 2 bis 12 definiert.

Das mobile Netzverteilsystem ist insbesondere dazu ausgelegt, elektrische Netze mit Leistungen zwischen 50kVA und 800kVA, bevorzugt zwischen 90kVA und 650kVA, insbesondere zwischen 90kVA und 400kVA, bevorzugt zwischen 250kVA und 400kVA zur Verfügung zu stellen. In der Regel ist ein Niederspannungsnetz am Netzverknüpfungspunkt über einen Transformator an eine höhere Netzebene, insbesondere ein Mittelspannungsnetz angeschlossen. Transformatoren mit Leistungen zwischen 90kVA und 650kVA werden hierfür eingesetzt, je nach Anzahl der Stränge, die der Transformator bedient und der Art der an den Strängen angeordneten Teilnehmer. Störungen können entlang nur eines Abgangsstrangs eines Transformators auftreten, d.h. ein Strang ist fehlerhaft und kann abgeworfen werden, der Transformator funktioniert jedoch nach wie vor einwandfrei. Auch kann in oder am Transformator oder am Netzverknüpfungspunkt oder entlang aller Stränge ein Fehler auftreten, sodass der Transformator als solcher nicht mehr eingesetzt werden kann.

Im ersten Fall ist zur Störungsbeseitigung der Anschluss der Teilnehmer des gestörten Strangs an den bisherigen Transformator möglich, wobei jedoch eine neue Leitungsverlegung entlang des gestörten Strangs erfolgt. Im zweiten Fall kann durch eine Netzersatzanlage, beispielsweise ein mobiler Generator, der Transformator ersetzt werden und eine neue Leitungsverlegung entlang der Stränge erfolgt ausgehend von der Netzersatzanlage.

Um zu vermeiden, dass zur Behebung des Fehlers langwierige Fehlersuche und Baumaßnahmen notwendig sind, wird ein mobiles Netzverteilsystem vorgeschlagen, welches auf einem mobilen Anhänger mit zumindest einer Ladefläche und einer Achse geladen ist. Der mobile Anhänger ist dabei ein- oder zweiachsig und kann über eine Anhängerkupplung mit einem Zugwagen verbunden werden. Der mobile Anhänger kann beispielsweise unmittelbar an die Anhängerkupplung eines Lkws, auf den die Netzersatzanlage geladen ist, angekoppelt werden. Auch kann der mobile Anhänger an ein jegliches anderes Fahrzeug angekoppelt werden und so vom Betriebshof schnell und einfach an die Störungsstelle herangeführt werden.

Für die Störungsbehebung ist es zunächst nicht notwendig, dass der Fehler selbst behoben wird sondern vielmehr, dass die Teilnehmer schnell an das Versorgungsnetz angeschlossen werden. Hierzu ist auch eine provisorische, oberirdische Leitungsverlegung möglich, die durch den mobilen Anhänger in einer besonders flexiblen Weise bereitgestellt wird. Auf der Ladefläche des mobilen Anhängers lässt sich das notwendige Equipment leicht anordnen, um für die verschiedenen Fehlerfälle und unterschiedlichen Topologien und notwendige Verlegewege gerüstet zu sein.

Zunächst wird vorgeschlagen, dass auf der Ladefläche ein Anschlussfeld mit zumindest drei jeweils einphasigen Eingangsanschlüssen vorgesehen ist. Über dieses Anschlussfeld lässt sich das System mit der Netzersatzanlage oder dem vorhandenen Trafo koppeln. Für jede Phase ist ein jeweiliger Eingangsanschluss vorgesehen. Im Falle des typischen Drehstromnetzes sind drei Anschlüsse für die Phasen L1, L2, L3 sowie mindestens ein Anschluss für den kombinierten oder ggf. separierten Neutralleiter und/oder der Potentialerde vorgesehen. Somit kann das Anschlussfeld neben den drei Phasen weitere Eingangsanschlüsse für Neutralleiter und/oder Erdungsleiter aufweisen. Die Verbindung der Eingangsanschlüsse mit der Netzersatzanlage oder dem Trafo erfolgt über handelsübliche, herkömmliche Steckkupplungen, die einfach verfügbar sind. Das Netzverteilsystem kann somit am Ort der Störung über die Eingangsanschlüsse leicht und unproblematisch über Standartkomponenten mit dem noch funktionsfähigen Transformator oder der Netzanlage verbunden werden.

Für die Verteilung der elektrischen Leistung ist weiterhin auf der Ladefläche ein Verteilkasten montiert. Der Verteilkasten verfügt über ein Eingangsfeld und zumindest zwei, bevorzugter Weise mehr als zwei, insbesondere sechs Abgangsfelder. Auch kann ein zweiter Verteilkasten auf der Ladefläche montiert sein um die Anzahl der Abgangsfelder zu erhöhen, an jedem Abgangsfeld kann ein dreiphasiger Ausgangsanschluss vorgesehen sein. Somit kann das Netzverteilsystem über die Ausgangsanschlüsse jeweils einen Strang mit einem oder mehreren Teilnehmern bedienen. Das Eingangsfeld ist mit den Eingangsanschlüssen des Anschlussfeldes fest verdrahtet. Dabei kann für jede Phase, den Nullleiter und/oder den Erdungsleiter eine Sammelschiene vorgesehen sein, die am Eingangsfeld jeweils mit einem der Eingangsanschlüsse fest verdrahtet sind. Die Ausgangsfelder sind mit den jeweiligen Sammelschienen gekoppelt und weisen ausgangsseitig jeweils einen dreiphasigen Ausgangsanschluss auf.

Zur Kopplung der Ausgangsanschlüsse mit Verteilkabeln wird vorgeschlagen, dass auf der Ladefläche zumindest zwei Anschlusskonsolen montiert sind. Dabei können die Anschlusskonsolen unmittelbar oder mittelbar auf der Ladefläche montiert sein. Die jeweiligen Anschlusskonsolen sind jeweils mit den Ausgangsanschlüssen verbunden, wobei jeweils eine Anschlusskonsole mit einem Ausgangsanschluss eines Ausgangsfeldes verbunden, insbesondere fest verdrahtet ist. Die Anschlusskonsolen sind bevorzugt als Steckkupplungen für Verteilkabel gebildet.

Das gegenständliche System zeichnet sich dadurch aus, dass es auf einem Anhänger montiert ist und so mobil und bedarfsgerecht zum Einsatzort verlegt werden kann. Der Servicetechniker, der zur Behebung der Störung im Einsatz ist, kann Verteilkabel an die Steckkupplungen einfach anstecken und mit den Hausanschlüssen verbinden. Über den Verteilkasten kann eine Absicherung der Ausgangsanschlüsse erfolgen. Über das Anschlussfeld erfolgt eine besonders einfache Montage an eine funktionierende Infrastruktur wie einen funktionieren Transformator oder eine Netzersatzanlage. Das Netzverteilsystem ermöglicht es somit, dem Servicetechniker in besonders schneller und einfacher Weise, über die Verteilkabel eine Erstversorgung der Teilnehmer nach einer Störung bereitzustellen.

Um nun eine Mehrzahl von Teilnehmern oder von der Infrastruktur entfernt liegende Teilnehmer mit den Anschlusskonsolen zu verbinden, wird gemäß einem Ausführungsbeispiel vorgeschlagen, dass auf der Ladefläche zumindest ein, in bevorzugter Weise eine Mehrzahl von als Verlängerungskabeln gebildeter Verteilkabel lose gelagert ist. Auf der Ladefläche können Verteilkabel mit unterschiedlichen Längen, beispielsweise 10m, 25m, 50m oder dergleichen gelagert sein. Die Verteilkabel können durch den Servicetechniker von der Ladefläche genommen und an die Steckkupplungen der Anschlusskonsolen angeschlossen werden, sowie zu den Teilnehmern hin verlegt werden. Hierbei können auch Ketten von mehreren aneinander gereihten Verteilkabeln gebildet werden.

Die Verteilkabel ermöglichen einen oberirdischen Anschluss des Netzverteilsystems an die Teilnehmer. Die Verteilkabel sind dabei herkömmliche, gummiummantelte Kabel mit Leitungsquerschnitten zwischen 16mm² und 25mm². Die Verteilkabel sind mit endständigen Steckkupplungen gebildet. Die Verteilkabel können herkömmliche CEE-Verlängerungskabel mit Gummimantel sein. Die Verteilkabel haben in der Regel fünf Leitungen für die Phasen L1, L2, L3 sowie N und Erde.

Die Steckkupplungen sind insbesondere CEE-Stecker, welche genormt sind und für Ströme von über 40A, insbesondere bis zu 63A ausgelegt sind. Die Steckkupplung der Anschlusskonsole ist insbesondere als Buchse zur Aufnahme eines Steckers eines Verteilkabels gebildet. Durch die verschiedenen Verteilkabel kann der Servicetechniker flexibel eine Verkabelung des Verteilsystems mit den Teilnehmern vornehmen.

Insbesondere bei langen Kabellängen und den gegebenen Leitungsquerschnitten kann es vorteilhaft sein, die Kabel auf einer Kabeltrommel auf dem Anhänger zu lagern. Es wird daher vorgeschlagen, dass die Verteilkabel auf einer Kabeltrommel gelagert sind, wobei die Kabeltrommel fest, schwenkbar fest oder lose auf der Ladefläche gelagert ist. Eine feste oder schwenkbar feste Kabeltrommel ist mit dem Anhänger gekoppelt und das Verteilkabel kann von dem Anhänger von der Kabeltrommel abgerollt werden. Lose gelagerte Kabeltrommeln eignen sich zu einer weiteren Verlegung entfernt von dem Verteilsystem. Das Kabel kann über die Kabeltrommel in einfacher Weise transportiert werden und dort verlegt werden, wo es benötigt wird. Durch die Schwenkbarkeit der Kabeltrommel können auch enge Abgangsradien unmittelbar an dem Verteilsystem realisiert werden.

Die Leistungsanforderungen verschiedener Teilnehmer können unterschiedlich sein. Auch ist es möglich, dass ausgehend von dem Verteilsystem an einem Anschluss ein erstes Verteilkabel hin zu einer Unterverteilung geführt wird und dort eine Unterverteilung auf eine Mehrzahl von Teilnehmern erfolgt. Durch diese unterschiedlichsten Leistungsanforderungen an die Kabel wird für einen flexiblen Einsatz des Netzverteilsystems vorgeschlagen, dass die Verteilkabel mit voneinander verschiedenen Leitungsquerschnitten auf der Ladefläche lose gelagert sind.

Lose gelagert bedeutet im Sinne dieser Anmeldung, dass die Komponenten auf dem Anhänger entfernbar gelagert sind. Die Komponenten können zwar für den Transport fixiert sein, sind jedoch insbesondere werkzeuglos entfernbar. Eine lose Lagerung kann in Kisten, Koffern, Trägern oder durch Verzurren oder Verhaken erfolgen. Während des Transports können die Komponenten an einem festen Ort auf der Ladefläche gelagert sein, für den Einsatz können die Komponenten dann jedoch von dort insbesondere werkzeuglos entfernt werden und von der Ladefläche weggenommen werden.

Neben den verschiedenen Leitungsquerschnitten können die Kabel auch verschiedene Kabellängen, beispielsweise 10m, 25m und 50m aufweisen, sodass eine flexible Verteilung in dem Gebiet der Störung möglich ist. Da die Kabel zur Versorgung von Teilnehmern eines Niederspannungsnetzes gedacht sind und ggf. lange Leitungslängen mit hohen Leistungsanforderungen realisiert werden, wird auch vorgeschlagen, dass die Leitungsquerschnitte der Leitungen, bzw. der Kabel 16mm² oder mehr betragen. Insbesondere sind die Leitungsquerschnitte zwischen 16mm² und 250mm², bevorzugt zwischen 16mm² und 35mm². Die Kabel haben eine äußere Isolation. In der äußeren Isolation, die als Gummiisolation gebildet sein kann, werden einzelne Leitungen, die jeweils einzeln isoliert sind geführt. Die Leitungen können Aderleitungen oder Litzenleitungen sein und insbesondere aus Kupfer oder Kupferlegierungen. Wenn in diesem Zusammenhang von Leitungen die Rede ist, so kann einerseits die mit der Isolation ummantelte Leitung und andererseits die metallische Ader bzw. Litze gemeint sein. Die Leitungen bzw. Kabel können jeweils auch als geschirmt ausgeführt sein.

Gemäß einem Ausführungsbeispiel wird vorgeschlagen, dass auf der Ladefläche zumindest ein Anschlusskabel mit einer Steckkupplung an seinem ersten Ende und abisolierten Leitungsenden an seinem zweiten Ende lose gelagert ist. Für den finalen Anschluss des Verteilsystems an dem Teilnehmer wird insbesondere am Hausanschlusskasten oder Netzverknüpfungspunkt des Teilnehmers eine elektrische Verbindung hergestellt. Die Unterschiedlichkeit verschiedener Netzverknüpfungspunkte, insbesondere verschiedener Hausanschlusskästen mit ihren verschiedenen Topologien und Anschlussmöglichkeiten bedingt, dass das Anschlusskabel für den finalen Anschluss an den Teilnehmer auf der einen Seite abisolierte Leitungsenden aufweist. An diese Leitungsenden kann je nach Anforderung des Netzverknüpfungspunkts des Teilnehmers eine Aderendhülse, eine Öse, ein Bolzen oder dergleichen angeschlossen werden, um hierüber eine Verbindung mit dem Netzverknüpfungspunkt des Teilnehmers herzustellen.

Wie bereits ausgeführt, ist auf dem Netzverteilsystem ein Verteilkasten vorgesehen. An diesem Verteilkasten sind ein Eingangsfeld und zumindest zwei Ausgangsfelder vorgesehen. Um die Netzersatzanlage oder den Transformator gegenüber dem Verteilsystem abzusichern, können an dem Eingangsfeld Sicherungen vorgesehen werden. Um die Anschlussfelder gegenüber dem Verteilsystem und untereinander abzusichern, können an den jeweiligen Anschlussfeldern Sicherungen vorgesehen sein. Es ist insbesondere vorgesehen, dass an dem Eingangsfeld pro Phase eine Sicherung vorgesehen ist. Auch ist vorgesehen, dass an dem jeweiligen Ausgangsfeld eine Sicherung pro Phase vorgesehen ist.

Da, wie bereits erwähnt, unterschiedlichste Leistungsanforderungen der Teilnehmer bestehen können, ist für einen mobilen, dynamischen Einsatz im Störfall eine bedarfsgerechte Absicherung von Eingangsfeld und Ausgangsfeldern notwendig. Um dies sicherzustellen, wird vorgeschlagen, dass auf der Ladefläche eine Mehrzahl von für das Eingangsfeld und/oder das Ausgangsfeld dimensionierten Stecksicherungen mit voneinander verschiedenen Sicherungskennlinien gelagert sind. Die Sicherungen sind insbesondere Standartsicherungen, die in Buchsen des Eingangsfeld und/oder der Ausgangsfelder einsteckbar sind. Die Sicherungen können unterschiedliche Sicherungskennlinien haben, insbesondere können diese unterschiedlichste Auslöseströme aufweisen. Je nach Einsatz kann dann die geeignete Sicherung in die Aufnahme des Eingangsfeldes oder eines der Ausgangsfelder eingesteckt werden, sodass der Teilnehmer als auch das Verteilsystem bedarfsgerecht abgesichert werden kann.

Gemäß einem Ausführungsbeispiel wird vorgeschlagen, dass auf der Ladefläche zumindest ein mobiler elektrischer Unterverteiler mit zumindest einem Eingang und zumindest zwei Ausgängen lose gelagert ist. Der Eingang als auch die Ausgänge können als Steckkupplung für die Verteilkabel gebildet sein. Die Steckkupplungen sind bevorzugt genormt, insbesondere CEE-Kupplungen. Es kann sinnvoll sein, mit einem ersten Verteilkabel ausgehend von der Anschlusskonsole auf der Ladefläche zu einem Unterverteiler zu verzweigen. Von dort können dann zwei oder mehr Verteilkabel von den Ausgängen abzweigen und zu den Teilnehmern geführt werden.

Es ist insbesondere vorgeschlagen, dass ausgehend von der Ladefläche ein erstes Verteilkabel an dem Netzverteilsystem angeschlossen ist. Am Ende zumindest eines ersten Verteilkabels ist dann das Anschlusskabel mit dem abisolierten Leitungsende angeschlossen, über welches der Netzverknüpfungspunkt des Teilnehmers angeschlossen wird.

Für die Anbindung des Netzverteilsystems an einen Transformator oder eine Netzersatzanlage werden die Eingangsanschlüsse mit Steckkupplungen vorgesehen. Die Eingangsanschlüsse sind einphasig und die Steckkupplungen sind insbesondere hierfür vorgesehene, genormte Steckkupplungen. Für den Fall der Ankopplung an eine Netzersatzanlage, verfügt diese in der Regel über abrollbare Kabel mit Steckkupplungen, die in die Eingangsanschlüsse eingesteckt werden können. Für den Fall einer Ankopplung an einen funktionierenden Transformator kann auf der Ladefläche für jeden Eingangsanschluss separat ein abrollbares Kabel vorgesehen sein.

Die Steckkupplungen an den Eingangsanschlüssen, Anschlusskonsolen, Verteilkabeln und/oder Verteilkästen können insbesondere Spritzwasser geschützt sein. Die Steckkupplungen sind insbesondere genormte Steckkupplungen, beispielsweise CEE-Steckkupplungen mit IPXY mit mindestens X=4 und mindestens Y≥4 nach DIN EN60529 oder ISO20653. Hierdurch kann eine Entstörung auch über mehrere Tage gewährleistet sein, da die Steckkupplungen vor Spritzwasser geschützt sind und somit auch in feuchten Umgebungen und außen dauerhaft elektrisch sicher sind.

Das mit den abisolierten Leitungsenden versehene Verteilkabel wird beim Teilnehmer an dessen Netzverknüpfungspunkt elektrisch angeschlossen. Hierzu kann ein Einstecken, Einschrauben, Verschrauben, Festklemmen, Anschrauben oder dergleichen erfolgen. In der Regel ist der Netzverknüpfungspunkt elektrisch abgesichert, beispielsweise durch einen Deckel oder dergleichen. Dies ist insbesondere im Falle eines Hausanschlusskastens der Fall. Um die Kontaktierung für den Entstörfall herzustellen, muss ein solcher Deckel entfernt werden und das Verteilkabel mit dem abisolierten Enden angeschlossen werden. Um einen Berührschutz sicherzustellen, insbesondere für die Dauer der Entstörung, wird vorgeschlagen, dass zumindest eine Isolationshaube für ein Hausanschlusskasten lose auf der Lagerfläche gelagert ist. Der Servicetechniker kann den Hausanschlusskasten öffnen, das Kabel anschließen und anschließend über die Isolationshaube die elektrischen Kontakte berührsicher abdecken.

Um die Einrichtung auf dem Anhänger vor Umwelteinflüssen zu schützen wird vorgeschlagen, dass der mobile Anhänger feste, die Lagefläche eingrenzende Seitenwände aufweist. Eine bevorzugt hintere Seitenwand kann darüber hinaus schwenkbar sein, insbesondere um eine horizontale Achse, aber auch durch zwei vertikale Achsen schwenkbare hintere Seitenwände. Auch Ein Deckel kann vorgesehen sein, der ebenfalls um eine horizontale Achse schwenkbar ist und an den Seitenwänden befestigt werden kann. Somit können die Komponenten auf dem Anhänger durch die Seitenwände und den Deckel geschützt werden.

Ein weiterer vorteilhafter Aspekt kann ein Messgerät sein, welches an dem Eingangsfeld und/oder dem Ausgangsfeld elektrisch kontaktiert ist. Über ein solches Messgerät kann insbesondere Strom und Spannung gemessen werden. Der Strom kann beispielsweise durch an dem Messgerät vorgesehene Rogowski - Spulen über die Kabel gemessen werden. Mit Hilfe des Messgerätes kann der tatsächliche Verbrauch im Störfall bzw. die Leistungsflüsse im Störfall gemessen werden. Das Messgerät kann fernauslesbar sein, sodass während der provisorischen Entstörung stets eine Überwachung der Leistungsflüsse und der Funktionalität des Verteilsystems möglich ist.

Für eine Überwachung des Verteilsystems kann auch vorgesehen sein, dass auf dem Anhänger ein Positionsbestimmungsgerät, insbesondere ein GPS-Empfänger vorgesehen ist, der ebenfalls fernauslesbar ist. Hierüber kann die Position des Verteilsystems bestimmt werden.

Nachfolgend wird der Gegenstand anhand einer Ausführungsbeispiele zeigenden Zeichnung näher erläutert. In der Zeichnung zeigen:
- Fig. 1: einen schematischen Aufbau eines provisorischen Verteilnetzes, welches mit einem gegenständlichen Netzverteilsystem aufgebaut werden kann;
- Fig. 2: eine Topologie eines aufgebauten Verteilnetzes gemäß einem Ausführungsbeispiel;
- Fig. 3: einen gegenständlichen Anhänger gemäß einem Ausführungsbeispiel;
- Fig. 4: einen bestückten mobilen Anhänger gemäß einem Ausführungsbeispiel;
- Fig. 5: ein Anschlussfeld gemäß einem Ausführungsbeispiel;
- Fig. 6: einen Verteilkasten gemäß einem Ausführungsbeispiel;
- Fig. 7: eine Anschlusskonsole gemäß einem Ausführungsbeispiel;
- Fig. 8: lose gelagerte Verteilkabel gemäß einem Ausführungsbeispiel;
- Fig. 9: Kabeltrommeln gemäß einem Ausführungsbeispiel;
- Fig. 10: einen Verteilkasten gemäß einem Ausführungsbeispiel;
- Fig. 11: ein Anschlusskabel gemäß einem Ausführungsbeispiel.

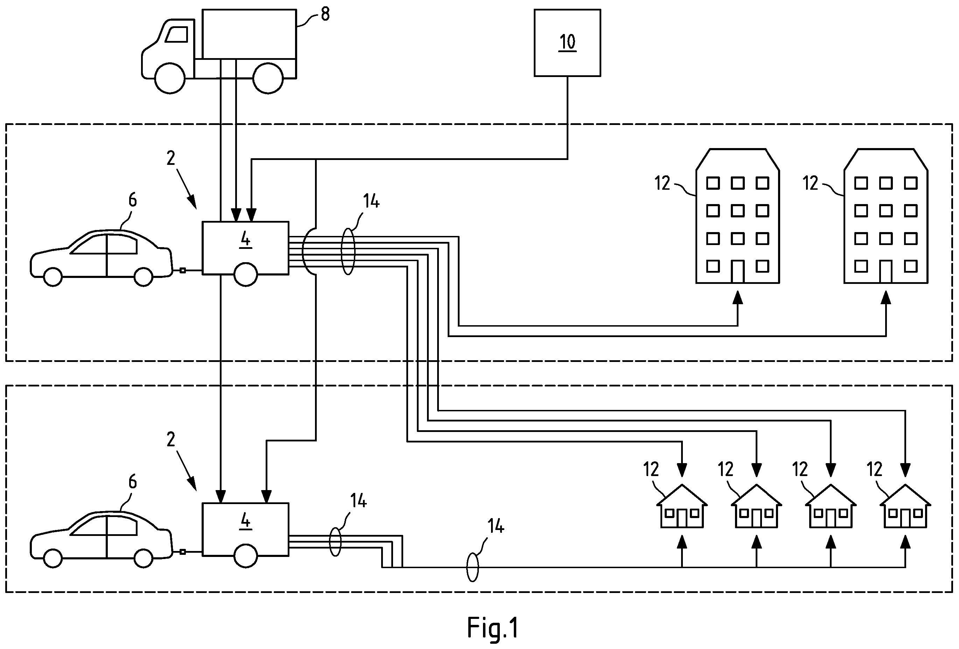

Fig. 1 zeigt zwei mobile Verteilsysteme 2, die jeweils auf einem Anhänger 4 montiert sind und mit einer Zugmaschine 6 gezogen werden. Die beiden System 2 sind unabhängig voneinander einsetzbar und sind lediglich zur Illustration doppelt gezeigt.

Ein System 2 kann mit einer Netzersatzanlage 8 elektrisch verbunden sein, wie nachfolgend noch gezeigt werden wird. Ein System 2 kann alternativ auch mit einem Netzverknüpfungspunkt 10 verbunden sein. Beide Anordnungen, sowohl mit Netzersatzanlage 8 als auch mit Netzverknüpfungspunkt 10 liegen an den Eingangsanschlüssen der Systeme 2 an. Ausgehend von den Systemen 2 können Teilnehmer 12 über Verteilkabel 14 mit dem elektrischen Versorgungsnetz notversorgt werden. Die Verkabelung ausgehend von den Systemen 2 hin zu den Teilnehmern 12 erfolgt über eine Vielzahl unterschiedlicher Verteilkabel 14.

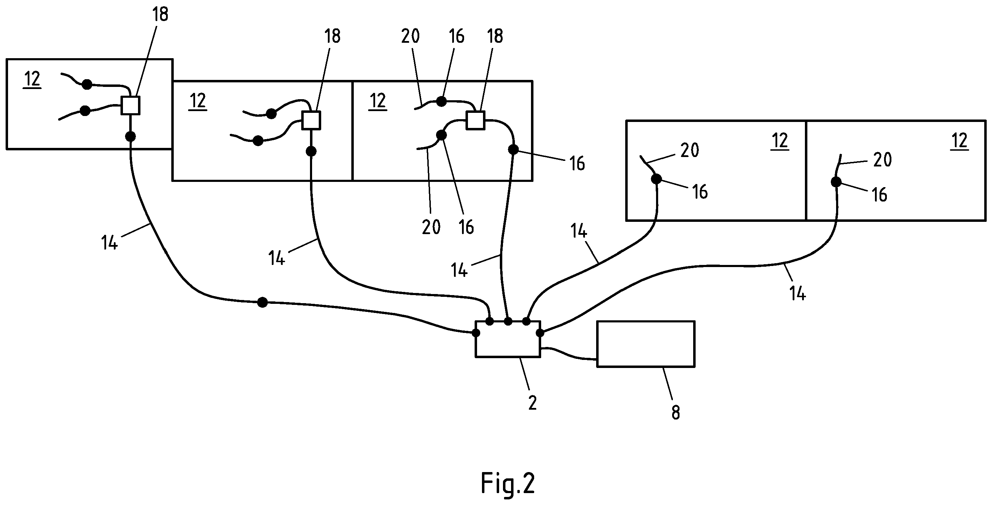

Eine mögliche Topologie ist in Fig. 2 dargestellt. In dem schematisch dargestellten Netzgebiet ist beispielsweise ein Netzfehler aufgetreten. In diesem Fall wird eine Netzersatzanlage 8 zusammen mit einem System 2 zu dem Standort verlegt. Anschließend erfolgt eine Verkabelung des Systems 2 mit der Netzersatzanlage 8 einerseits und mit den Teilnehmern 12 andererseits.

Für die Verteilung der elektrischen Energie zu den Teilnehmern 12 zweigen Verteilkabel 14 von dem System 2 ab bzw. sie werden manuell oberirdisch verlegt. Die Verteilkabel 14 können auf dem Weg vom System 2 zum Teilnehmer 12 auch verlängert werden, indem sie über Steckkupplungen 16 miteinander verbunden werden. Ferner können Unterverteiler 18 vorgesehen sein, die ebenfalls über Steckkupplungen 16 mit den Verteilkabeln verbunden werden.

Ausgehend von den Unterverteilern 18 oder unmittelbar von einer Steckkupplung 16 kann ein Anschlusskabel 20 bis an den Netzverknüpfungspunkt des Teilnehmers geführt werden. Das Anschlusskabel 20 kann auf der einen Seite eine Steckkupplung aufweisen 16, mit der dieses mit dem Verteilkabel 14 verbunden werden kann. Andererseits kann das Anschlusskabel 20 auf der gegenüberliegenden Seite freigelegte Leitungen aufweisen, über die ein elektrischer Anschluss an den Hausverteilkasten oder einen sonstigen Netzverknüpfungspunkt des Teilnehmers 12 möglich ist.

Im Störungsfall wird das System 2 sowie die Netzersatzanlage 8 an den Standort verlegt. Anschließend werden die Anschlusskabel 20 mit den Hausanschlusskästen verbunden und über die Steckkupplungen 16 und die Verteilkabel 14 werden die so angeschlossenen Hausanschlusskästen mit den Ausgangsanschlüssen des Systems 2 verbunden. Gleichzeitig oder nachfolgend erfolgt eine Verbindung des Systems 2 mit der Netzersatzanlage. Im System 2 wird ein Verteilkasten mit den entsprechenden Sicherungen bestückt. Nach vollständiger Verkabelung wird zunächst die Netzersatzanlage 8 eingeschaltet und anschließend die Sicherung im Verteilkasten des Systems 2 eingeschaltet, sodass das provisorische Versorgungsnetz unter Spannung gesetzt wird und die Teilnehmer 12 mit elektrischem Strom versorgt sind.

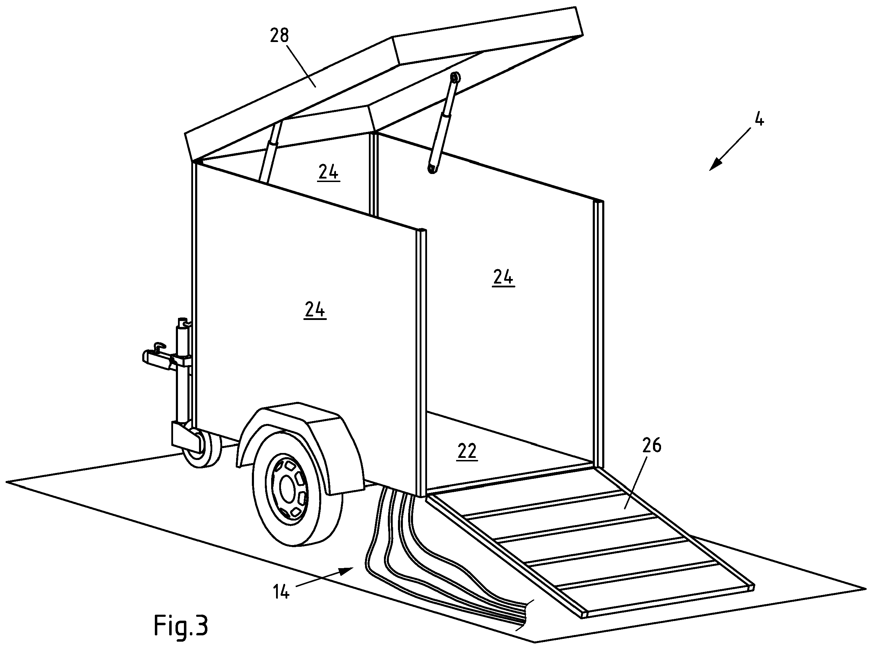

Das System 2 ist auf einem Anhänger 4, wie in der Fig. 3 dargestellt, montiert. Der Anhänger 4 hat eine Ladefläche 22. Auf der Ladefläche 22 werden, wie nachfolgend noch beschrieben werden wird, verschiedene Komponenten fest oder lose montiert. Die Ladefläche 22 eingrenzend sind drei Seitenwände 24 bevorzugt fest an der Ladefläche befestigt. Eine vierte Seitenwand 26 ist um eine horizontale Achse schwenkbar an der Ladefläche 22 angelenkt, sodass die Ladefläche 22 über diese Seitenwand 26 erreichbar ist. In den Seitenwänden 24 können Türen und Öffnungen sowie Kabeldurchführungen als auch Anschlusskonsolen, insbesondere Steckkupplungen montiert sein, sodass von außen eine Bestückung möglich ist. Aus den Seitenwänden 24 können die Verteilkabel 14 herausgeführt werden, die bedarfsgerecht angeschlossen und verlegt werden. Ein Deckel 28 kann das System 2 von oben abdecken. Die Ladefläche 22 kann über die Seitenwände 24, 26 sowie den Deckel 28 vollständig verschlossen werden, sodass nach der Installation der Notstromversorgung diese verschlossen werden kann und unbeaufsichtigt betrieben werden kann, ohne dass Gefahr für Leib und Leben besteht.

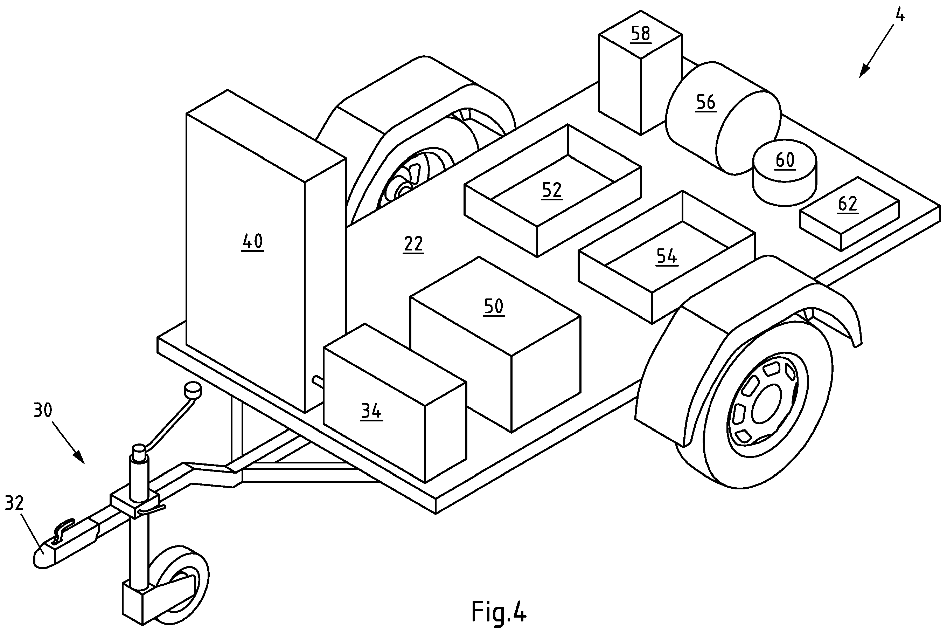

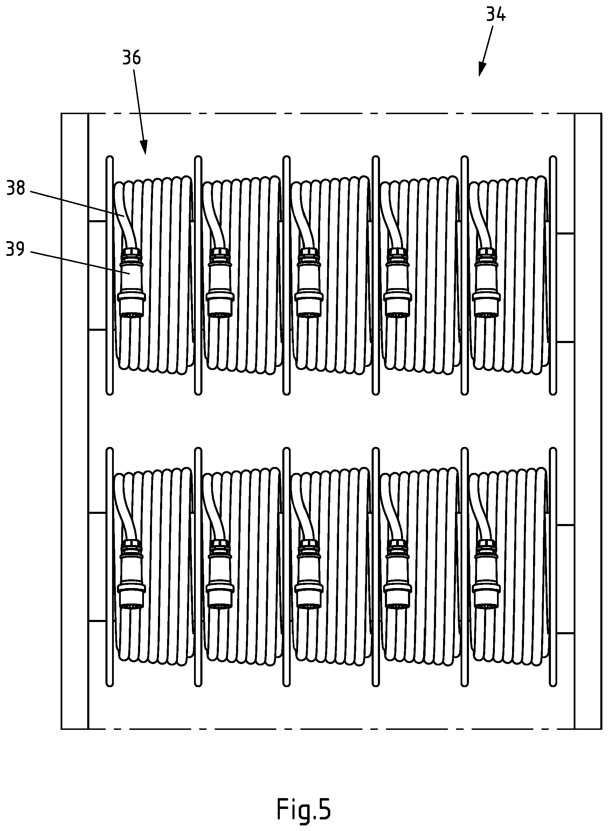

Fig. 4 zeigt schematisch eine Ladefläche 22 eines Anhängers 4 mit den verschiedenen Komponenten und ohne die Seitenwände 24, 26 oder den Deckel 28. Die Ladefläche 22 ist über eine Deichsel 30 mit einer Anhängerkupplung 32 verbunden und kann so mit der Zugmaschine 6 verbunden werden. Die räumliche Anordnung der hier beschriebenen Komponenten ist rein beispielhaft und kann natürlich anders sein. Eingangsseitig des Systems 2 ist ein Anschlussfeld 34 vorgesehen. Das Anschlussfeld 34 kann beispielsweise entsprechend der Fig. 5 gebildet sein.

In der Fig. 5 ist ein Doppelanschlussfeld gezeigt, bei welchem auf jeweils einer Kabeltrommel 36 jeweils ein einadriges Gummikabel 38 zur Verbindung mit einem Netzverknüpfungspunkt vorgesehen ist. Die Kabel 38 sind allesamt mit genormten Steckkupplungen 39 bestückt und können so werkzeuglos oder nahezu werkzeuglos mit Anschlusskonsolen eines Netzverknüpfungspunkts verbunden werden. Alternativ oder kumulativ zu den Kabeltrommeln 36 und Kabeln 38 kann das Anschlussfeld 34 auch über fest montierte Steckkuppelungen verfügen. In einem solchen Fall kann die entsprechende Netzersatzanlage 8 mit Kabeltrommel 36 und Kabel 38 wie in Fig. 5 beschrieben bestückt sein und somit kann ausgehend von der Netzersatzanlage eine Beschaltung des Systems 2 am Anschlussfeld 34 erfolgen. Die Kabel 38 des Anschlussfelds 34 sind fest verdrahtet mit einem Eingangsfeld eines Anschlusskastens 40.

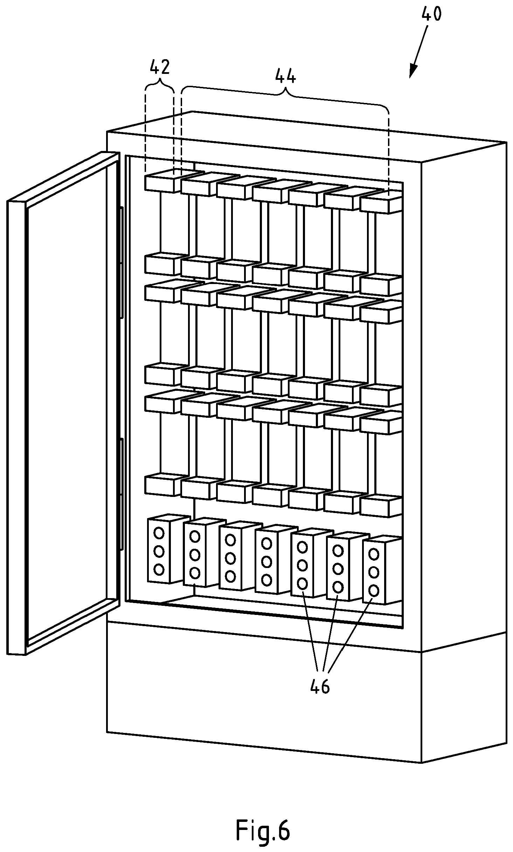

Der Anschlusskasten 40 ist beispielhaft in Fig. 6 dargestellt.

Der Anschlusskasten 40 kann ein Standard Anschlusskasten sein mit einem Gehäuse und einer Tür zum Öffnen. Eingangsseitig kann der Anschlusskasten 40 über ein Eingangsfeld 42 verfügen. Die Kabel 38 sind jeweils mit einem der Anschlüsse des Eingangsfelds 42 verbunden. Ausgehend von dem Eingangsfeld 42 wird jeweils eine Sammelschiene horizontal zu Ausgangsfeldern 44 geführt. An den Anschlüssen des Eingangsfelds 42 als auch den Ausgangsfeldern 44 kann pro Phase und pro Feld jeweils eine Aufnahme für eine Stecksicherung vorgesehen werden. Ausgehend von den Sicherungen der Ausgangsfelder 40 werden die einzelnen Phasen auf dreiphasige Ausgangsanschlüsse 46 geführt. In dem gezeigten Beispiel hat der Anschlusskasten 40 ein Eingangsfeld 42 und sechs Ausgangsfelder 44 und somit sechs Ausgangsanschlüsse 46. Die Ausgangsanschlüsse 46 sind mit den Phasen L1, L2, L3 über die Ausgangsfelder 44 verbunden. Über Sammelschienen sind die Ausgangsanschlüsse darüber hinaus mit dem Neutralleiter und dem Erdungsleiter verbunden. Im Bereitschaftsmodus, das heißt, wenn noch keine Notstromversorgung etabliert ist, sind die Sicherungsaufnahmen von Eingangsfeld 42 und der Ausgangsfelder 44 unbestückt, sind jedoch so eingerichtet, dass sie mit Standard Sicherungen bestückt werden, indem diese eingesteckt werden.

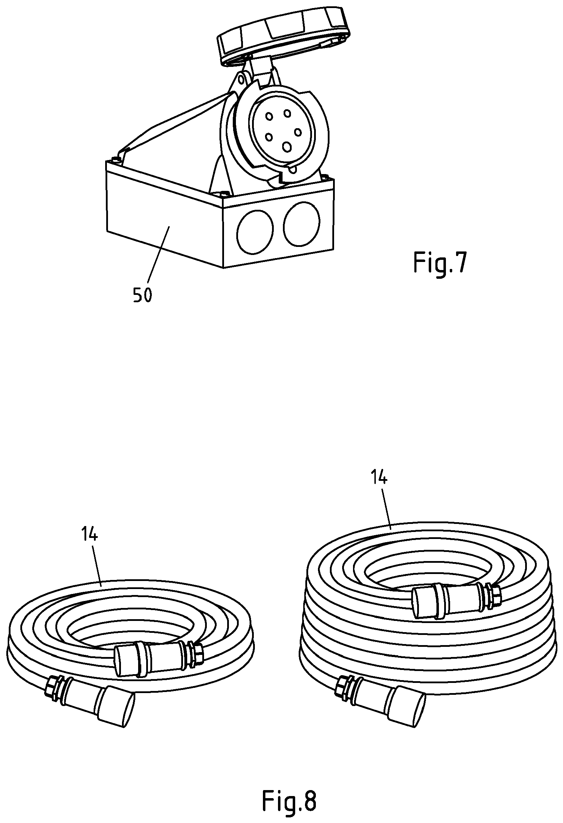

Die Ausgangsanschlüsse 46 sind auf dem System 4 mit Anschlusskonsolen 50 verbunden, wie Fig. 4 zeigt. Für jeden der Ausgangsanschlüsse 46, im gezeigten Beispiel sechs, ist jeweils eine Anschlusskonsole 50 wie in Fig. 7 dargestellt fest auf der Ladefläche 22 montiert. Die Anschlusskonsole 50 ist eine genormte CEE-Steckdose, die dreiphasig inklusive Neutralleiter und Erdungsleiter eine Verbindung mit einer Steckkupplung eines Verteilkabels ermöglicht.

Neben diesen fest auf der Ladefläche 22 montierten Komponenten ist auf der Ladefläche 22 Stauraum für eine lose Lagerung von weiteren Komponenten. Zunächst ist es notwendig, nach dem Verdrahten die Sicherungen in den Anschlusskasten 40 einzusetzen. Zur Verwahrung von Sicherungen verschiedenster Sicherungskennlinien ist eine Verwahrbox 52 auf der Ladefläche 22 vorgesehen. Hierin können die Sicherungen, bevorzugt sortiert nach Sicherungskennlinie oder Nennwert, gelagert werden.

Neben der Sicherung ist es notwendig, ausgehend von den Anschlusskonsolen 50 Verteilkabel anzuschließen. Diese Verteilkabel können in einer Box 54 verwahrt werden. Verteilkabel sind insbesondere Standard Kabel 14, wie sie in Fig. 8 dargestellt sind, die endständig mit genormten Steckern und Buchsen versehen sind. Beispielsweise können diese Kabel 14 fünfadrige Kabel mit Leitungsquerschnitten von 16mm² sein. Die Kabel 14 können gummiummantelt sein und die Steckkupplungen können Spritzwasser geschützt sein. Die Kabel können geschirmt sein.

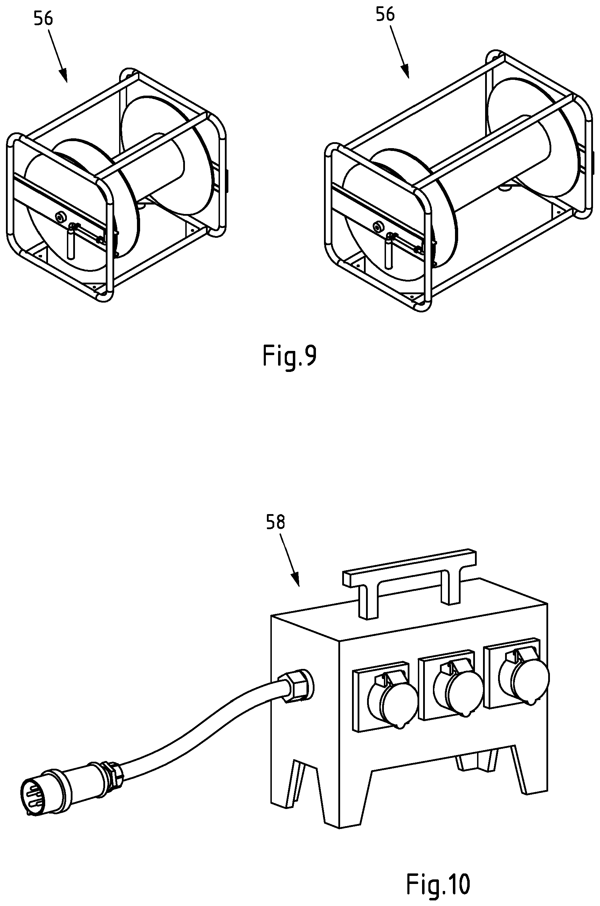

Um die Verteilkabel 14 abzurollen, entweder unmittelbar von der Ladefläche 22 oder an einen entfernten Ort, sind Kabeltrommeln 56, wie in der Fig. 9 gezeigt, bestückt mit jeweils einem oder mehreren der Verteilkabel 14 auf der Ladefläche 22 gelagert.

Darüber hinaus kann ein Unterverteiler 58, wie in der Fig. 10 gezeigt auf der Ladefläche 22 lose gelagert sein. Der Unterverteiler 58 hat einen Eingang zum Anschluss mit einem Verteilkabel 14 und zwei oder mehr Ausgänge zum Anschluss mit einem Verteilkabel 14 aufzuweisen.

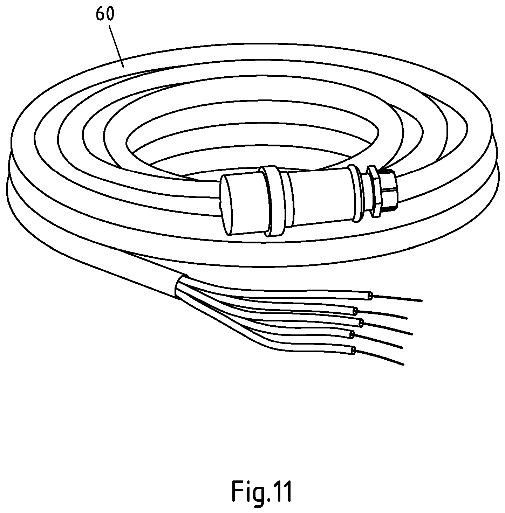

Zum abschließenden Anschluss eines Verteilkabels an einen Hausverteilkasten, können Anschlusskabel 60, wie in Fig. 11 gezeigt, auf der Ladefläche 22 gelagert werden. Die Anschlusskabel 60 sind auf der einen Seite mit einer Steckkupplung versehen, um mit den Verteilkabel 14 steckend verbunden zu werden. Auf der anderen Seite der Steckkupplung sind die Kabel 60 abisoliert, sodass diese mit einem Hausverteilkasten verbunden werden können. Je nach Bedarf am Hausverteilkasten können die abisolierten Enden mit Ösen, Kabelendhülsen oder dergleichen versehen werden.

Zusätzlich, aber nicht gezeigt, kann auf der Ladefläche 22 ein Positionsmodul montiert sein, beispielsweise ein GPS-Modul, ein Glonass-Modul, ein Galileo-Modul oder dergleichen, welches insbesondere fernauslesbar ist und die Position des Systems 2 bestimmbar macht.

Darüber hinaus kann an dem Eingangsfeld 42 und/oder eine oder mehrere Phasen des Ausgangsfeldes 44 ein nicht gezeigtes Messgerät angeschlossen werden, mit welchem im Notbetrieb die Leistungsflüsse auf den einzelnen Phasen und/oder den einzelnen Ausgangsanschlüssen 46 und/oder den Eingangsanschlüssen messbar sind. Hierdurch kann eine Überwachung und Bewertung des Notsystems erfolgen.

Auch können auf der Ladefläche 22 ein oder mehrere Abdeckhauben 62 vorgesehen sein, die zum Schutz eines geöffneten Hausanschlusskastens oder eines sonstigen Netzverknüpfungspunkts an einem Teilnehmer dienen.

Im Störungsfall wird das System 2 mit der Anhängerkupplung 2 an eine Zugmaschine 6 gehängt und zu der Störung verlegt. Ist eine Netzersatzanlage 8 notwendig, kann diese ebenfalls dorthin verlegt werden.

Die Anschlusskabel 60 werden an den Hausanschlusskästen der Teilnehmer 12 elektrisch verbunden, indem zunächst das gestörte, bisher am Hausanschlusskasten angeschlossene Netz abgetrennt wird und anschließend die einzelnen Phasen, der Neutralleiter und der Erdungsleiter aufgelegt wird. Anschließend werden die Anschlusskabel 60 optional über die Unterverteilung 58 und über zumindest ein Verteilkabel 14 mit den Anschlusskonsolen 40 verbunden. Eingangsseitig wird die Netzersatzanlage 8 über die Kabel 38 mit dem Eingangsfeld 42 des Anschlusskastens 40 verbunden. Im Eingangsfeld 42 als auch in den benötigten Ausgangsfeldern 44 werden bedarfsgerecht Sicherungen eingesteckt und umgelegt. Hiernach ist das Netz provisorisch aufgebaut und die Teilnehmer 12 mit Strom versorgt.

### Bezugszeichenliste

- 2: System
- 4: Anhänger
- 6: Zugmaschine
- 8: Netzersatzanlage
- 10: Netzverknüpfungspunkt
- 12: Teilnehmer
- 14: Verteilkabel
- 16: Steckkupplung
- 18: Unterverteilung
- 20: Anschlusskabel
- 22: Ladefläche
- 24, 26: Seitenwand
- 28: Deckel
- 30: Deichsel
- 32: Anhängerkupplung
- 34: Anschlussfeld
- 36: Kabeltrommel
- 38: Kabel
- 40: Anschlusskasten
- 42: Eingangsfeld
- 44: Ausgangsfeld
- 46: Ausgangsanschluss
- 50: Anschlusskonsole
- 52: Aufbewahrungsbox
- 54: Aufbewahrungskasten
- 56: Kabeltrommel
- 58: Unterverteilung
- 60: Anschlusskabel
- 62: Sicherung

## Patentansprüche

1. Mobiles Netzverteilsystem umfassend
- einen mobilen Anhänger (4) mit zumindest einer Achse und einer Ladefläche,
- ein auf der Ladefläche (22) montiertes Anschlussfeld (34) mit zumindest drei jeweils einphasigen Eingangsanschlüssen,
- zumindest einen Verteilkasten, der über ein Eingangsfeld (42) mit den jeweiligen Eingangsanschlüssen verbunden ist und über zumindest zwei Ausgangsfelder (44) mit jeweils zumindest zwei zumindest dreiphasigen Ausgangsanschlüssen (46) verbunden ist,
**dadurch gekennzeichnet,**
- **dass** zumindest zwei Anschlusskonsolen (50), die jeweils mit den Ausgangsanschlüssen (46) verbunden sind, als Steckkupplungen (16) für Verteilkabel (14) gebildet sind, und
- **dass** das Eingangsfeld (42) mit den Eingangsanschlüssen des Anschlussfeldes (44) fest verdrahtet ist,
- **dass** für jede Phase eine Sammelschiene vorgesehen ist, die am Eingangsfeld (42) jeweils mit einem der Eingangsanschlüsse fest verdrahtet ist und
- **dass** die Ausgangsfelder (44) mit den jeweiligen Sammelschienen gekoppelt sind und ausgangsseitig jeweils den dreiphasigen Ausgangsanschluss aufweisen.

2. Mobiles Netzverteilsystem nach Anspruch 1,
**dadurch gekennzeichnet,**
- **dass** auf der Ladefläche (22) zumindest ein, bevorzugt eine Mehrzahl von als Verlängerungskabel gebildetes Verteilkabel (14) lose gelagert sind.

3. Mobiles Netzverteilsystem nach Anspruch 1 oder 2,
**dadurch gekennzeichnet,**
- **dass** die Verteilkabel (14) auf einer Kabeltrommel (56) gelagert sind, wobei die Kabeltrommel fest, schwenkbar fest oder lose auf der Ladefläche (22) gelagert ist.

4. Mobiles Netzverteilsystem nach Anspruch 1 oder 2,
**dadurch gekennzeichnet,**
- **dass** die Verteilkabel (14) einen Leitungsquerschnitt von zumindest 16mm²aufweisen und/oder dass Verteilkabel mit voneinander verschiedenen Leitungsquerschnitten und/oder Kabellängen auf der Ladefläche (22) lose geladen sind.

5. Mobiles Netzverteilsystem nach einem der vorangehenden Ansprüche,
**dadurch gekennzeichnet,**
- **dass** auf der Ladefläche (22) zumindest ein Anschlusskabel (20) mit einer Steckkupplung (16) an seinem ersten Ende und abisolierten Leitungsenden an seinem zweiten Ende lose gelagert ist.

6. Mobiles Netzverteilsystem nach einem der vorangehenden Ansprüche,
**dadurch gekennzeichnet,**
- **dass** auf der Ladefläche (22) eine Mehrzahl von für das Eingangsfeld (42) und/oder das Ausgangsfeld (44) dimensionierten Stecksicherungen mit voneinander verschiedenen Sicherungskennlinien gelagert sind.

7. Mobiles Netzverteilsystem nach einem der vorangehenden Ansprüche,
**dadurch gekennzeichnet,**
- das auf der Ladefläche (22) zumindest ein mobiler elektrischer Unterverteiler (58) mit zumindest einem Eingang und zumindest zwei Ausgängen lose gelagert ist, wobei der Eingang und die Ausgänge als Steckkupplungen (16) für die Verteilkabel gebildet sind.

8. Mobiles Netzverteilsystem nach einem der vorangehenden Ansprüche,
**dadurch gekennzeichnet,**
- **dass** die Eingangsanschlüsse Steckkupplungen (16) aufweisen, wobei die Eingangsanschlüsse als abrollbare Kabel (38) oder als fest an der Ladefläche (22) montierte Anschlusskonsolen (50) gebildet sind.

9. Mobiles Netzverteilsystem nach einem der vorangehenden Ansprüche,
**dadurch gekennzeichnet,**
- **dass** die Steckkupplungen gemäß IPXY mit X=mindesten 4 und Y>= 4 gemäß DIN EN 60529 oder ISO 20653 gebildet sind.

10. Mobiles Netzverteilsystem nach einem der vorangehenden Ansprüche,
**dadurch gekennzeichnet,**
- **dass** zumindest eine Isolationshaube für einen Hausanschlusskasten lose auf der Ladefläche (22) gelagert ist.

11. Mobiles Netzverteilsystem nach einem der vorangehenden Ansprüche,
**dadurch gekennzeichnet,**
- **dass** der mobile Anhänger (4) zumindest drei feste, die Ladefläche (22) eingrenzende Seitenwände (24,26) aufweist und/oder der mobile Anhänger (4) zumindest eine um eine horizontale Achse schwenkbare Seitenwand und/oder einen um eine horizontale Achse schwenkbaren Deckel (28) aufweist, oder vertikal schwenkende Türen.

12. Mobiles Netzverteilsystem nach einem der vorangehenden Ansprüche,
**dadurch gekennzeichnet,**
- **dass** an dem Eingangsfeld (42) und/oder zumindest einem Ausgangsfeld (44) ein U/l Messgerät angeschlossen ist, insbesondere dass das Messgerät fernauslesbar ist.

## Claims

1. Mobile power grid distribution system comprising
- a mobile trailer (4) with at least one axle and a loading area (22),
- a connection panel (34) mounted on the loading area (22) with at least three single-phase input connections,
- at least one distribution box connected to the respective input terminals via an input panel (42) and connected to at least two output panels (44), each with at least two at least three-phase output terminals (46),
**characterized in**
- **that** at least two connection consoles (50), each of which is connected to the output terminals (46), are arranged as plug couplings (16) for distribution cables (14), and
- **that** the input panel (42) is hard-wired to the input terminals of the connection panel (44),
- **that** a busbar is provided for each phase, which is hard-wired to one of the input terminals at the input panel (42), and
- **that** the output panels (44) are coupled to the respective busbars and each have the three-phase output terminal on the output side.

2. Mobile power grid distribution system according to claim 1,
**characterized in**
- **that** at least one, preferably a plurality of distribution cables (14) formed as extension cables are loosely stored on the loading area (22).

3. Mobile power grid distribution system according to claim 1 or 2,
**characterized in**
- **that** the distribution cables (14) are stored on a cable drum (56), wherein the cable drum is stored fixedly, pivotably fixedly, or loosely on the loading area (22).

4. Mobile power grid distribution system according to claim 1 or 2,
**characterized in**
- **that** the distribution cables (14) have a conductor cross-section of at least 16 mm² and/or that distribution cables with different conductor cross-sections and/or cable lengths are loosely loaded on the loading area (22).

5. Mobile power grid distribution system according to one of the preceding claims, **characterized in**
- **that** at least one connection cable (20) with a plug coupling (16) at its first end and stripped wire ends at its second end is loosely stored on the loading area (22).

6. Mobile power grid distribution system according to one of the preceding claims, **characterized in**
- **that** a plurality of plug fuses, dimensioned for the input panel (42) and/or the output panel (44), with different fuse characteristics are stored on the loading area (22) and.

7. Mobile power grid distribution system according to one of the preceding claims, **characterized in**
- **that** at least one mobile electrical sub-distribution board (58) with at least one input and at least two outputs is loosely mounted on the loading area (22), wherein the input and the outputs are formed as plug couplings (16) for the distribution cables.

8. Mobile power grid distribution system according to one of the preceding claims, **characterized in**
- **that** the input connections have plug couplings (16), wherein the input connections are formed as rollable cables (38) or as connection consoles (50) permanently mounted on the loading area (22).

9. Mobile power grid distribution system according to one of the preceding claims, **characterized in**
**that** the plug couplings are formed in accordance with IPXY, where X=at least 4 and Y>= 4, in accordance with DIN EN 60529 or ISO 20653.

10. Mobile power grid distribution system according to one of the preceding claims, **characterized in**
- **that** at least one insulation cover for a house connection box is loosely stored on the loading area (22).

11. Mobile power grid distribution system according to one of the preceding claims, **characterized in**
**that** the mobile trailer (4) has at least three fixed side walls (24, 26) delimiting the loading area (22) and/or the mobile trailer (4) has at least one side wall that can be pivoted about a horizontal axis and/or a cover (28) that can be pivoted about a horizontal axis, or vertically pivoting doors.

12. Mobile power grid distribution system according to one of the preceding claims, **characterized in**
**that** a V/I measuring device is connected to the input panel (42) and/or at least one output panel (44), in particular that the measuring device can be read remotely.

## Revendications

1. Système de distribution de réseau mobile comprenant
- une remorque mobile (4) avec au moins un essieu et une surface de chargement,
- un panneau de connexion (34) monté sur la surface de chargement (22) avec au moins trois bornes d'entrée respectivement monophasées,
- au moins un boîtier de distribution qui est relié aux bornes d'entrée respectives par un panneau d'entrée (42) et qui est relié à au moins deux bornes de sortie (46) au moins triphasées par au moins deux panneaux de sortie (44),
**caractérisé en ce que**
au moins deux consoles de raccordement (50), qui sont chacune reliées aux bornes de sortie (46), sont configurés comme des connecteurs enfichables (16) pour des câbles de distribution (14), et
- que le panneau d'entrée (42) est câblé de manière fixe aux bornes d'entrée du panneau de connexion (44),
- qu'un jeu de barres est prévu pour chaque phase qui est câblé de manière fixe au niveau du panneau d'entrée (42) avec l'une des bornes d'entrée et
- que les panneaux de sortie (44) sont couplés aux jeux de barres respectifs et ont côté sortie la borne de sortie triphasée.

2. Système de distribution de réseau mobile selon la revendication 1,
**caractérisé en ce**
- **qu'**au moins un, de préférence plusieurs câbles de distribution (14) formés comme des rallonges sont stockés de manière lâche sur la surface de chargement (22).

3. Système de distribution de réseau mobile selon la revendication 1 ou 2, **caractérisé en ce**
- **que** les câbles de distribution (14) sont stockés sur un tambour à câble (56), où le tambour à câble est monté de manière fixe, pivotante ou libre sur la surface de chargement (22).

4. Système de distribution de réseau mobile selon la revendication 1 ou 2, **caractérisé en ce**
- **que** les câbles de distribution (14) ont une section de conducteur d'au moins 16 mm² et/ou que des câbles de distribution avec des sections de conducteur et/ou des longueurs de câble différentes les uns des autres sont stockés de manière lâche sur la surface de chargement (22).

5. Système de distribution de réseau mobile selon l'une des revendications précédentes,
**caractérisé en ce**
- **qu'**au moins un câble de raccordement (20) avec un connecteur enfichable (16) à sa première extrémité et des extrémités de conducteurs dénudées à sa deuxième extrémité est stocké de manière lâche sur la surface de chargement (22).

6. Système de distribution de réseau mobile selon l'une des revendications précédentes,
**caractérisé en ce**
- **qu'**une pluralité de fusibles enfichables dimensionnés pour le panneau d'entrée (42) et/ou le panneau de sortie (44) avec des courbes caractéristiques de fusibles différentes les unes des autres sont stockés sur la surface de chargement (22).

7. Système de distribution de réseau mobile selon l'une des revendications précédentes,
**caractérisé en ce**
- **qu'**au moins un sous-distributeur électrique mobile (58) avec au moins une entrée et au moins deux sorties est stocké de manière lâche sur la surface de chargement (22), où l'entrée et les sorties sont configurés comme des connecteurs enfichables (16) pour les câbles de distribution.

8. Système de distribution de réseau mobile selon l'une des revendications précédentes,
**caractérisé en ce**
- **que** les bornes d'entrée comportent des connecteurs enfichables (16), où les bornes d'entrée sont formées sous forme de câbles déroulables (38) ou de consoles de raccordement (50) montées de manière fixe sur la surface de chargement (22).

9. Système de distribution de réseau mobile selon l'une des revendications précédentes,
**caractérisé en ce**
**que** les connecteurs enfichables sont réalisés selon IPXY avec X = au moins 4 et Y >= 4 selon DIN EN 60529 ou ISO 20653.

10. Système de distribution de réseau mobile selon l'une des revendications précédentes,
**caractérisé en ce**
- **que** au moins un capot isolant pour un coffret de raccordement domestique est stocké de manière amovible sur la surface de chargement (22).

11. Système de distribution de réseau mobile selon l'une des revendications précédentes,
**caractérisé en ce**
- **que** la remorque mobile (4) comporte au moins trois parois latérales fixes (24, 26) délimitant la surface de chargement (22) (24, 26) et/ou que la remorque mobile (4) a au moins une paroi latérale pivotante autour d'un axe horizontal et/ou un couvercle (28) pivotant autour d'un axe horizontal, ou des portes pivotantes verticalement.

12. Système de distribution de réseau mobile selon l'une des revendications précédentes,
**caractérisé en ce**
- **qu'**un appareil de mesure U/I est raccordé au panneau d'entrée (42) et/ou à au moins un panneau de sortie (44), en particulier que l'appareil de mesure est lisible à distance.
